# EUROPÄISCHE PATENTSCHRIFT

(11) **EP 4 514 625 B1**
(45) Veröffentlichungstag und Bekanntmachung des Hinweises auf die Patenterteilung: **25.02.2026**
(21) Anmeldenummer: 23711668.6
(22) Anmeldetag: 06.03.2023
(51) Int. Cl.: B60C 9/20

(54) **VERSTÄRKUNGSLAGE EINES FAHRZEUGLUFTREIFENS UND FAHRZEUGLUFTREIFEN MIT EINER DERARTIGEN VERSTÄRKUNGSLAGE**
REINFORCEMENT PLY OF A PNEUMATIC VEHICLE TYRE, AND PNEUMATIC VEHICLE TYRE COMPRISING SUCH A REINFORCEMENT PLY
NAPPE DE RENFORT D'UN PNEUMATIQUE DE VÉHICULE, ET PNEUMATIQUE DE VÉHICULE COMPRENANT UNE TELLE NAPPE DE RENFORT

(30) Priorität: 29.04.2022 DE 102022204207
(43) Veröffentlichungstag der Anmeldung: 05.03.2025
(73) Patentinhaber: Continental Reifen Deutschland GmbH, 30175 Hannover (DE)
(72) Erfinder: GELLINGS, Marco, 30175 Hannover (DE)
(74) Vertreter: Continental Corporation
(86) Internationale Anmeldenummer: PCT/DE2023/200045
(87) Internationale Veröffentlichungsnummer: WO 2023/208289

(56) Entgegenhaltungen:
- EP-A1- 3 736 140
- JP-A- 2005 041 455
- JP-A- 2007 186 057
- JP-A- 2015 140 082
- JP-A- H 092 016
- JP-A- S6 137 501

## Beschreibung

Die Erfindung betrifft eine Verstärkungslage eines Fahrzeugluftreifens, umfassend einen streifenförmigen Abschnitt aus einer Vielzahl von parallel zueinander angeordneten und in Gummimaterial eingebetteten Festigkeitsträgern, wobei der streifenförmige Abschnitt eine Längsachse und zwei parallel zur Längsachse verlaufende Randkanten aufweist und die Festigkeitsträger sich unter einem Winkel zur Längsachse zwischen den Randkanten des Abschnittes erstrecken, wobei benachbarte Festigkeitsträger jeweils voneinander verschiedene Längen aufweisen und so angeordnet sind, dass deren Enden in Richtung der Längsachse betrachtet stufenförmig versetzt zueinander in Bezug auf die Randkanten angeordnet sind. Die Erfindung betrifft ferner auch einen entsprechenden Fahrzeugluftreifen.

Übliche Fahrzeugluftreifen etwa für PKWs sowie leichte Nutzfahrzeuge verfügen über einen Aufbau, bei dem unterhalb des radial äußeren Laufstreifens, welcher auch das Reifenprofil trägt, mindestens eine Verstärkungslage aus in Gummimaterial eingebetteten Festigkeitsträgern vorgesehen ist. Diese Verstärkungslagen sind im nicht eingebauten Rohzustand als streifenförmige Abschnitte ausgebildet, wobei die Festigkeitsträger, üblicherweise Stahl- oder Kunststoffdrähte, mittels einer Schlagschere oder dergleichen so zugeschnitten sind, dass sich im Bereich der Randkanten eine gerade Kante ergibt, d. h. eine Verbindungslinie durch alle Enden der in Richtung der Längsachse aufeinanderfolgenden Festigkeitsträger verläuft parallel zur Längsachse und den Randkanten der Verstärkungslage.

Üblicherweise werden in derartigen Fahrzeugluftreifen mehrere dieser Verstärkungslagen übereinander als Gürtelpaket angeordnet, wobei die Festigkeitsträger den einzelnen Verstärkungslagen und dem gesamten Gürtelpaket eine hohe Steifigkeit verleihen. Im Bereich der Randkanten, in denen die Festigkeitsträger enden, nimmt die Steifigkeit hingegen deutlich ab. Damit die Abnahme der Steifigkeit zu den Randkanten eines Gürtelpakets hin keinen zu großen sprunghaften Abfall aufweist, werden die einzelnen Verstärkungslagen unterschiedlich breit geschnitten und aufeinandergelegt. Allerdings ergibt sich aufgrund der geraden Schnittführung dennoch ein signifikanter Steifigkeitssprung für jede einzelne Verstärkungslage. Die einzelnen Randkanten werden daher häufig durch ein Gummi-Insert oder einen Lagenumschlag (wrap) abgedeckt, um die Haltbarkeit des Reifens zu verbessern.

Aus der US 3 719 218 A und der US 3 841 376 A ist es zudem bekannt, die Randkanten der Verstärkungslage zickzackförmig oder wellenförmig zu beschneiden, wodurch jedoch einzelne Festigkeitsträger unerwünscht mehrfach durchtrennt werden und randseitige Spitzen ausgebildet werden, in denen nur sehr kurze Längenabschnitte einzelner Festigkeitsträger eingebettet sind, was zu Haltbarkeitsproblemen führt.

Die WO 03/045714 A1 offenbart Verstärkungslagen, bei denen die einzelnen Festigkeitsträger in übereinstimmender Länge geschnitten sind und mehrere benachbarte Festigkeitsträger zu Paketen zusammengefasst werden. Aufeinanderfolgende Pakete werden mit einem axialen Versatz zueinander angeordnet. Aufgrund der Zusammenfassung mehrerer benachbarter Festigkeitsträger zu Paketen zeigt sich allerdings auch bei dieser Ausgestaltung ein signifikanter Steifigkeitssprung, was verbesserungswürdig erscheint.

Die JP S61 37501 A offenbart die Ausgestaltung einer Verstärkungslage mit abwechselnd längeren und kürzeren Festigkeitsträgern, wobei die längeren Festigkeitsträger gemeinsam mit den einbettenden Gummilagen entlang gerader Randkanten zugeschnitten werden und auf diese Weise eine schräge Schnittkante erhalten, die weiterhin zu unerwünscht hohen Spannungsspitzen in den Randbereichen führen.

Aus der JP H09 2016 A ist es bekannt, zwei Lagen mit jeweils gleichen, aber unterschiedlich langen Festigkeitsträgern aufeinander zu legen und in Gummimasse einzubetten, um eine Verstärkungslage zu bilden. Alle Festigkeitsträger werden entlang gerader Randkanten zugeschnitten, die ebenfalls zu verbesserungswürdig hohen Spannungsspitzen in den Randbereichen führen.

Aus der JP 2005 041455 A ist eine gattungsgemäße Ausgestaltung einer Verstärkungslage bekannt, bei der sich kürzere und längere Festigkeitsträger jeweils abwechseln. Die Festigkeitsträger sind in Gummimaterial eingebettet und die gesamte Verstärkungslage weist zickzackförmige Verläufe der Randkanten auf. Die damit einhergehende Steifigkeitsmodulierung und die Dauerhaltbarkeit sind nach wie vor nicht zufriedenstellend.

Aufgabe der Erfindung ist es, eine Verstärkungslage eines Fahrzeugluftreifens vorzuschlagen, die die Nachteile des Standes der Technik überwindet.

Zur Lösung der gestellten Aufgabe wird erfindungsgemäß die Ausgestaltung einer Verstärkungslage gemäß den Merkmalen des Patentanspruchs 1 vorgeschlagen. Vorteilhafte Ausgestaltungen und Weiterbildungen der erfindungsgemäßen Verstärkungslage sind Gegenstand der abhängigen Ansprüche.

Ferner schlägt die Erfindung auch einen Fahrzeugluftreifen vor, der mit mindestens einer derartigen erfindungsgemäßen Verstärkungslage ausgestattet ist.

Der erfindungsgemäße Vorschlag beruht darauf, dass in Richtung der Längsachse benachbarte Festigkeitsträger jeweils voneinander verschiedene Längen aufweisen und so angeordnet sind, dass deren Enden in Richtung der Längsachse betrachtet stufenförmig versetzt zueinander in Bezug auf die Randkanten angeordnet sind.

Im Rahmen der Erfindung wird eine Anordnung aus jeweils drei unterschiedlich langen aufeinanderfolgenden Festigkeitsträgern vorgeschlgen, wobei entweder
a) ein erster Festigkeitsträger der Anordnung mit einer größeren Länge als der benachbarte nächste Festigkeitsträger ausgebildet ist, gefolgt von einem benachbarten dritten Festigkeitsträger, der eine zwischen der Länge des ersten und zweiten Festigkeitsträgers liegende Länge aufweist, oder
b) der erste Festigkeitsträger der Anordnung eine mittlere Länge, der nachfolgende zweite Festigkeitsträger die größte Länge und der benachbarte dritte Festigkeitsträger die im Vergleich geringste Länge der Anordnung aufweist,
und diese Anordnung sodann mehrfach in Richtung der Längsachse wiederholt wird.

Erfindungsgemäß ist es damit möglich, die Festigkeitsträger so zu einer Verstärkungslage zusammenzufügen, dass eine gedachte Verbindungslinie der den Randkanten zugewandten Enden einen unregelmäßigen Verlauf mit einer Vielzahl unterschiedlicher Steigungen, mit Hinterschnitten, Überschneidungen und dergleichen aufweist. Es hat sich im Rahmen der Erfindung gezeigt, dass durch eine solche Ausgestaltung die Biegesteifigkeit der Verstärkungslage über die Breite betrachtet zu den Randkanten hin in einem größeren Bereich abfällt. Dies sorgt dafür, dass die Gesamtsteifigkeit eines aus mehreren derartigen Verstärkungslage gebildeten Gürtelpakets eines Fahrzeugluftreifens graduell zu den Randkanten abnimmt. Damit ist es möglich, auf bisher erforderliche Gummi-Inserts oder Lagenumschläge zu verzichten, was nicht nur Kostenvorteile mit sich bringt, sondern überdies auch den Rollwiderstand eines solchermaßen ausgebildeten Fahrzeugluftreifens verringert.

Unter einer stufenförmig versetzten Anordnung versteht die Erfindung eine Anordnung, bei der die gedachte Verbindung der Enden von mehr als zwei aneinander angrenzender Festigkeitsträger nicht als gerade Linie ausgeführt ist, sondern sprunghaften Richtungsänderungen unterliegt.

Nach einem Vorschlag der Erfindung sind die Festigkeitsträger jeweils aus Stahldrähten gebildet, wobei jeder Festigkeitsträger lediglich einen oder auch mehrere derartige Stahldrähte umfassen kann.

Zur weiteren Steigerung des graduellen Steifigkeitsabfalls der erfindungsgemäßen Verstärkungslage wird vorgeschlagen, dass die Festigkeitsträger in Bezug auf ihre Längsachse endseitig rechtwinklig zugeschnitten sind. Auf diese Weise werden Spannungsspitzen an den jeweiligen Enden der einzelnen Festigkeitsträger minimiert.

Die vorangehend erläuterte Verstärkungslage ermöglicht den Aufbau von Gürtelpaketen eines Fahrzeugluftreifens, bei denen die Biegesteifigkeitssprünge über einen größeren Bereich verteilt werden, was sich insgesamt in einer deutlich verbesserten Gürtelhaltbarkeit niederschlägt.

Ein erfindungsgemäßer Fahrzeugluftreifen zeichnet sich dadurch aus, dass er mindestens eine Verstärkungslage der vorangehend beschriebenen Art aufweist, vorzugsweise mehrere derartige und zu einem Gürtelpaket zusammengefasste Verstärkungslagen.

Weitere Ausgestaltungen und Einzelheiten der Erfindung werden nachfolgend anhand der Ausführungsbeispiele darstellenden Zeichnung erläutert. Es zeigen:
- Figur 1: eine schematische Aufsicht auf eine Ausführungsform der Erfindung;
- Figur 2: eine schematische Aufsicht auf eine weitere Ausführungsform der Erfindung;
- Figur 3: eine schematische Aufsicht auf eine Ausführungsform gemäß dem Stand der Technik;
- Figur 4: eine schematische Aufsicht auf eine weitere Ausführungsform gemäß dem Stand der Technik;
- Figur 5: in vergrößerter Darstellung das Ende eines einzelnen Festigkeitsträgers gemäß der Erfindung;
- Figur 6: die Aufsicht auf eine Verstärkungslage eines Fahrzeugluftreifens.

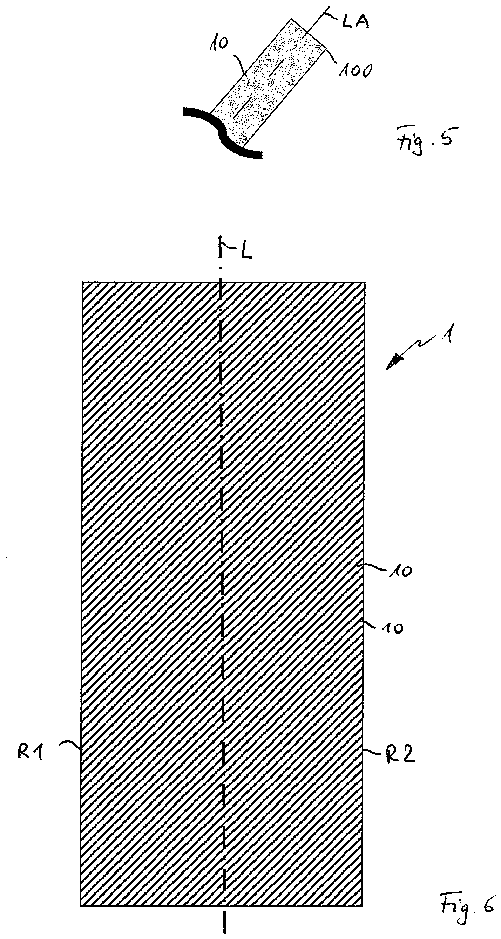

Aus der Figur 6 ist in einer schematischen Aufsicht eine Verstärkungslage eines Fahrzeugluftreifens ersichtlich, wie sie beispielsweise unterhalb des Laufstreifens zur Anwendung kommt, um ein Gürtelpaket auszubilden.

Die Verstärkungslage ist als streifenförmiger Abschnitt 1 aus einer Vielzahl von parallel zueinander angeordneten Festigkeitsträgern 10 gebildet, die aus einzelnen oder mehreren zusammengefassten Stahldrähten gebildet sind und unter einem Winkel von hier beispielsweise 45° zur Längsachse L des Abschnittes 1 verlaufend angeordnet sind. Die einzelnen Festigkeitsträger 10 sind dabei in ein hier nicht dargestelltes Gummimaterial eingebettet und verlaufen von der linksseitigen Randkante R1 zur rechtsseitigen Randkante R2, wobei beide Randkanten R1, R2 parallel zur Längsachse L verlaufen.

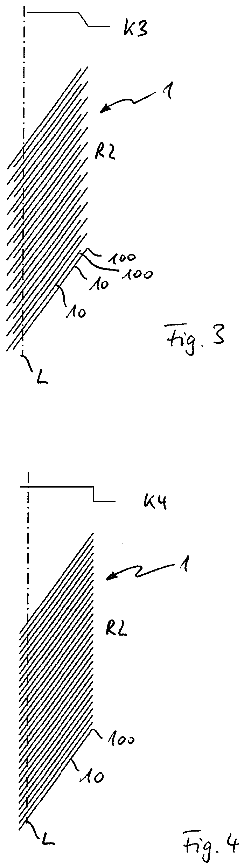

In einer typischen aus dem Stand der Technik bekannten Ausgestaltung, die in der Figur 4 dargestellt ist, sind die einzelnen Festigkeitsträger 10 bei Herstellung der Verstärkungslage zum Beispiel mittels einer Schlagschere auf eine gemeinsame übereinstimmende Länge geschnitten, d. h. die Enden 100 der einzelnen Festigkeitsträger 10 verlaufen in Bezug auf die Randkanten R1 (nicht dargestellt) und R2 entlang einer geradlinigen Verbindungslinie parallel zur Längsachse L.

Betrachtet man die Steifigkeit dieser Verstärkungslage nach dem Stand der Technik über die Breite von der Mittellängsachse L bis zur Randkante, hier stellvertretend R2, so stellt sich die in der Figur 4 als Kurve K4 dargestellte Charakteristik mit einem stufenförmigen Abfall der Biegesteifigkeit an den Enden 100 der einzelnen Festigkeitsträger 10 ein. Dies ist problematisch für die Haltbarkeit.

Im nicht zur Erfindung gehörenden Ausführungsbeispiel gemäß Figur 3 folgt auf einen Festigkeitsträger 10 mit größerer Länge ein Festigkeitsträger 10 mit einer demgegenüber geringeren Länge. Diese Anordnung wird sodann mehrfach in Richtung der Längsachse L wiederholt.

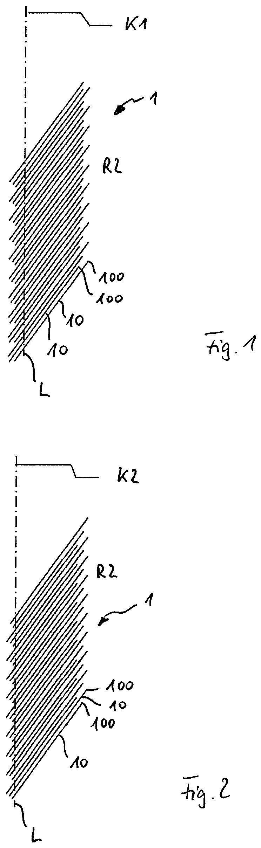

Bei den erfindungsgemäßen Ausgestaltungen gemäß Figuren 1 und 2 sind die benachbarten Festigkeitsträger 10 in jeweils voneinander verschiedenen Längen ausgebildet und so angeordnet, dass deren Enden 100 in Richtung der Längsachse L betrachtet stufenförmig versetzt zueinander in Bezug auf die Randkanten, hier stellvertretend R2, angeordnet sind.

So ist im Ausführungsbeispiel gemäß Figur 1 der unterste, erste Festigkeitsträger 10 mit einer größeren Länge als der benachbarte nächste Festigkeitsträger 10 ausgebildet, gefolgt von einem benachbarten dritten Festigkeitsträger 10, der eine zwischen der Länge des ersten und zweiten Festigkeitsträgers 10 liegende Länge aufweist. Diese Anordnung wird sodann mehrfach in Richtung der Längsachse L wiederholt.

Im Ausführungsbeispiel gemäß Figur 2 weist der erste, unterste Festigkeitsträger 10 eine mittlere Länge, der nachfolgende zweite Festigkeitsträger 10 die größte Länge und der benachbarte dritte Festigkeitsträger 10 die im Vergleich geringste Länge auf. Diese Anordnung wird sodann mehrfach in Richtung der Längsachse L wiederholt.

Im Ergebnis ergibt sich bei den erfindungsgemäßen Ausgestaltungen gemäß Figuren 1-2 eine gedachte Verbindungslinie der Enden 100 benachbarter Festigkeitsträger 10, die keinen geradlinigen Verlauf aufweist, da die Enden 100 benachbarter Festigkeitsträger infolge der unterschiedlichen Längendimensionierung stufenförmig versetzt zueinander angeordnet sind. Es ergibt sich eine ausgefranst wirkende Anordnung der Enden 100 der Festigkeitsträger im Bereich der Randkanten R1, R2. Betrachtet man wiederum die Steifigkeit dieser Verstärkungslage von der Mittellängsachse L zu den Randkanten, hier stellvertretend R2, ergeben sich für die Ausgestaltungen gemäß Figuren 1-2 die jeweils eingezeichneten Kurven K1 und K2, bei denen im Vergleich zur Kurve K4 kein stufenförmiger Abfall der Steifigkeit im Bereich der Randkanten 2 auftritt, sondern ein allmählicher Abfall, welcher sich in einer deutlich verbesserten Haltbarkeit eines solchermaßen ausgestatteten Fahrzeugluftreifens äußert.

Zur weiteren Verringerung von Spannungsspitzen im Bereich der Randkanten R1, R2 können die einzelnen Enden 100 der Festigkeitsträger 10 gemäß der Darstellung in Figur 5 rechtwinklig zur Längsachse LA des einzelnen Festigkeitsträger 10 geschnitten sein.

Es versteht sich, dass mehrere derartige Verstärkungslagen übereinander, vorzugsweise mit sich kreuzender Orientierung der Festigkeitsträger 10 aufeinandergelegt und zu einem Gürtelpaket zusammengefasst werden können. Auch ist es möglich, einzelne erfindungsgemäß ausgestaltete Verstärkungslagen gemäß Figuren 1-2 mit einer gleichförmigen Ausgestaltung wie in Figur 4 dargestellt zu kombinieren.

### Bezugszeichenliste:

- 1:: Abschnitt
- 10:: Festigkeitsträger
- 100:: Ende
- L:: Längsachse des Abschnittes
- LA:: Längsachse des Festigkeitsträgers
- R1:: Randkante
- R2:: Randkante
- K1:: Kurve der Steifigkeit in Figur 1
- K2:: Kurve der Steifigkeit in Figur 2
- K3:: Kurve der Steifigkeit in Figur 3
- K4:: Kurve der Steifigkeit in Figur 4

## Patentansprüche

1. Verstärkungslage eines Fahrzeugluftreifens, umfassend einen streifenförmigen Abschnitt (1) aus einer Vielzahl von parallel zueinander angeordneten und in Gummimaterial eingebetteten Festigkeitsträgern (10), wobei der streifenförmige Abschnitt (1) eine Längsachse (L) und zwei parallel zur Längsachse (L) verlaufende Randkanten (R1, R2) aufweist und die Festigkeitsträger (10) sich unter einem Winkel zur Längsachse (L) zwischen den Randkanten (R1, R2) des Abschnittes (1) erstrecken, -wobei benachbarte Festigkeitsträger (10) jeweils voneinander verschiedene Längen aufweisen und so angeordnet sind, dass deren Enden (100) in Richtung der Längsachse (L) betrachtet stufenförmig versetzt zueinander in Bezug auf die Randkanten (R1, R2) angeordnet sind, **dadurch gekennzeichnet, dass** eine Anordnung aus jeweils drei unterschiedlich langen aufeinanderfolgenden Festigkeitsträgern (10) vorgesehen ist, wobei entweder
a) ein erster Festigkeitsträger (10) der Anordnung mit einer größeren Länge als der benachbarte nächste Festigkeitsträger (10) ausgebildet ist, gefolgt von einem benachbarten dritten Festigkeitsträger (10), der eine zwischen der Länge des ersten und zweiten Festigkeitsträgers (10) liegende Länge aufweist, oder
b) der erste Festigkeitsträger (10) der Anordnung eine mittlere Länge, der nachfolgende zweite Festigkeitsträger (10) die größte Länge und der benachbarte dritte Festigkeitsträger (10) die im Vergleich geringste Länge der Anordnung aufweist,
und diese Anordnung sodann mehrfach in Richtung der Längsachse (L) wiederholt wird.

2. Verstärkungslage nach Anspruch 1, **dadurch gekennzeichnet, dass** die Festigkeitsträger (10) jeweils aus Stahldrähten gebildet sind.

3. Verstärkungslage nach einem der Ansprüche 1 oder 2, **dadurch gekennzeichnet, dass** die Festigkeitsträger (10) jeweils einen oder mehrere Stahldrähte umfassen.

4. Verstärkungslage nach einem der Ansprüche 1 bis 3, **dadurch gekennzeichnet, dass** die Festigkeitsträger (10) in Bezug auf ihre Längsachse (LA) endseitig rechtwinklig zugeschnitten sind.

5. Fahrzeugluftreifen, umfassend mindestens eine Verstärkungslage gemäß einem der vorangehenden Ansprüche.

## Claims

1. Reinforcing ply of a vehicle pneumatic tyre comprising a strip-shaped portion (1) consisting of a multiplicity of reinforcing materials (10) arranged in parallel and embedded in rubber material, wherein the strip-shaped portion (1) has a longitudinal axis (L) and two outer edges (R1, R2) running parallel to the longitudinal axis (L), and the reinforcing materials (10) extend at an angle with respect to the longitudinal axis (L) between the outer edges (R1, R2) of the portion (1), -wherein adjacent reinforcing materials (10) each have different lengths and are arranged in such a way that, as viewed in the direction of the longitudinal axis (L), their ends (100) are arranged offset in a step-wise manner with respect to each other in relation to the outer edges (R1, R2), **characterized in that** an arrangement of three successive reinforcing materials (10) of different lengths is provided, wherein either
a) a first reinforcing material (10) of the arrangement is formed with a longer length than the adjacent next reinforcing material (10), followed by an adjacent third reinforcing material (10) which has a length between the length of the first and second reinforcing material (10), or
b) the first reinforcing material (10) of the arrangement has a middle length, the subsequent second reinforcing material (10) has the greatest length, and the adjacent third reinforcing material (10) has the comparatively smallest length of the arrangement,
and this arrangement is then repeated multiple times in the direction of the longitudinal axis (L).

2. Reinforcing ply according to Claim 1, **characterized in that** the reinforcing materials (10) are each formed from steel wires.

3. Reinforcing ply according to either of Claims 1 or 2, **characterized in that** the reinforcing materials (10) each comprise one or more steel wires.

4. Reinforcing ply according to one of Claims 1 to 3, **characterized in that** the reinforcing materials (10) are cut to size at the end at right angles in relation to their longitudinal axis (LA).

5. Pneumatic vehicle tyre, comprising at least one reinforcing ply according to one of the preceding claims.

## Revendications

1. Nappe de renfort d'un pneumatique de véhicule, comprenant une section en forme de bande (1) composée d'une pluralité d'éléments de renfort (10) disposés parallèlement les uns aux autres et incorporés dans un matériau de caoutchouc, la section en forme de bande (1) comportant un axe longitudinal (L) et deux bords (R1, R2) s'étendant parallèlement à l'axe longitudinal (L) et les éléments de renfort (10) s'étendant selon un angle par rapport à l'axe longitudinal (L) entre les bords (R1, R2) de la section (1), - des éléments de renfort (10) adjacents présentant chacun des longueurs différentes les unes des autres et étant disposés de telle sorte que leurs extrémités (100), vues dans la direction de l'axe longitudinal (L), sont décalées les unes par rapport aux autres en gradins par rapport aux bords (R1, R2), **caractérisée en ce qu'**est prévu un agencement composé de respectivement trois éléments de renfort (10) se suivant les uns les autres de longueurs différentes, soit
a) un premier élément de renfort (10) de l'agencement étant formé avec une longueur supérieure à celle de l'élément de renfort (10) suivant adjacent, suivi d'un troisième élément de renfort (10) adjacent, qui présente une longueur comprise entre la longueur des premier et deuxième éléments de renfort (10), soit
b) le premier élément de renfort (10) de l'agencement présentant une longueur moyenne, le deuxième élément de renfort (10) suivant présentant la longueur la plus grande et le troisième élément de renfort (10) adjacent présentant la longueur comparativement la plus petite de l'agencement,
et ledit agencement étant ensuite répété plusieurs fois dans la direction de l'axe longitudinal (L).

2. Nappe de renfort selon la revendication 1, **caractérisée en ce que** les éléments de renfort (10) sont formés chacun à partir de fils d'acier.

3. Nappe de renfort selon l'une des revendications 1 ou 2, **caractérisée en ce que** les éléments de renfort (10) comprennent chacun un ou plusieurs fils d'acier.

4. Nappe de renfort selon l'une des revendications 1 à 3, **caractérisée en ce que** les éléments de renfort (10) sont découpés à angle droit côté extrémité par rapport à leur axe longitudinal (LA).

5. Pneumatique de véhicule, comprenant au moins une nappe de renfort selon l'une des revendications précédentes.
